Europäisches Patentamt

European Patent Office

Office européen des brevets

(19)

(11) Publication number: **0 139 044**
**B1**

(12) **EUROPEAN PATENT SPECIFICATION**

(45) Date of publication of patent specification: **02.03.88**

(51) Int. Cl.⁴: **C 08 K 5/09, C 08 L 21/00**

(21) Application number: **83112938.2**

(22) Date of filing: **21.12.83**

(54) **Vulcanizable polymeric compositions containing zinc dimethacrylate and fillers.**

(30) Priority: **20.10.83 US 543706**

(43) Date of publication of application:
**02.05.85 Bulletin 85/18**

(45) Publication of the grant of the patent:
**02.03.88 Bulletin 88/09**

(84) Designated Contracting States:
**BE DE FR GB IT NL**

(56) References cited:
**DE-A-2 343 385**
**FR-A-2 342 315**
**GB-A-2 042 553**
**JP-A-51 138 616**
**US-A-3 823 122**

**C.M. BLOW et al.: "Rubber technology and manufacture", second edition, pages 186-187, Butterworth Scientific, London, GB;**
**Patent Abstracts of Japan, Vol. 1, No.26 (C-76) (1174)**

(73) Proprietor: **THE FIRESTONE TIRE & RUBBER COMPANY**
**1200 Firestone Parkway**
**Akron, Ohio 44317 (US)**

(72) Inventor: **Hayes, Robert Arthur**
**2980 Cedar Hill Road**
**Cuyahoga Falls Ohio 44223 (US)**
Inventor: **Conard, Wendell Reed**
**627 Longmere Road**
**Kent Ohio 44240 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

# 0 139 044

**Description**

The invention relates to vulcanizable polymeric compositions comprising:

(a) a rubbery polymer selected from the group consisting of natural rubber and a copolymer of a conjugated diene and at least one monoolefinic monomer;

(b) zinc dimethacrylate;

(c) from 30 to 70 parts by weight per 100 parts by weight of said rubbery polymer of a filler selected from the group consisting of carbon black, clay, silica, mixtures of carbon black and clay and mixtures of clay and silica; and

(d) a cure effective amount of a peroxide curing agent.

The invention further relates to certain vulcanizable polymeric compositions containing combinations of zinc dimethacrylate and clay which synergistically enhance the strength of the vulcanized compositions.

US—A—3,823,122 relates to curable SBR or neoprene elastomer compositions containing from 1 to 15 parts by weight per 100 parts by weight of elastomer of a substituted acrylic acid or acid salt, with the preferred acid salt indicated to be zinc methacrylate. Elastomer compositions which are disclosed include a reinforcing filler such as carbon black but do not include a peroxide curing agent.

US—A—4,082,288 discloses free-radical crosslinkable elastomer compositions containing a peroxide crosslinkable elastomer, from 10 to about 60 parts by weight per 100 parts by weight of elastomer of basic zinc methacrylate, a peroxide curing agent and optionally reinforcing fillers such as litharge or zinc oxide in amounts of 2 to 10 parts by weight per 100 parts by weight of elastomer.

US—A—4,191,671 relates to curable rubber compositions comprising (A) a diene elastomer (B) an alpha, beta ethylenically unsaturated carboxylic acid, wherein the ratio by weight of component (A) to component (B) is 87/13 to 55/45, (C) a divalent metal compound being present in quantities of 50 to 150 parts by weight per 100 parts by weight of component (B), and (D) an organic peroxide being present in quantities of 0.3 to 5.0 parts by weight per 100 parts by weight of the combined weight of components (A) and (B). The compositions may additionally contain an unpolymerizable carboxylic acid, carbon black in amounts of less than 50 parts by weight per 100 parts by weight of elastomer and an amine and/or phenol compound.

US—A—4,192,790 relates to elastomer compositions having reduced Mooney viscosity in the compounded state. The Mooney viscosity of the elastomer compositions are reduced by the incorporation therein of from 0.1 to 7.0 parts by weight of basic zinc methacrylate per 100 parts by weight of elastomer. In addition to the basic zinc methacrylate, the elastomer compositions contain various elastomers or elastomer blends, an inorganic particulate filler such as silica, calcium carbonate, silicates such as clay, hydrated aluminum silicate and optionally carbon black (20 to 150 parts per 100 parts elastomer) and curing agents such as peroxide curatives.

US—A—4,266,772 relates to solid golf balls formed from a curable elastomer composition comprising a free-radical crosslinkable elastomer, especially a peroxide crosslinkable elastomer, basic zinc methacrylate (about 10 to about 60 parts by weight per 100 parts by weight of elastomer) and a curing agent such as a peroxide curing agent. The compositions may optionally contain reinforcing fillers such as litharge or zinc oxide in amounts of for example 2 to 10 parts per 100 parts of elastomer.

GB—A—1,091,818 discloses vulcanizable compositions comprising alpha-olefin polymers and a curing system consisting of metal salts of acrylic acid or methacrylic acid in amounts of from 1 to 10 parts of metal salt per 100 parts of polymer and an organic peroxide. The compositions may additionally contain reinforcing agents and fillers such as carbon blacks, metal oxides, clays and silica pigments.

GB—A—2,042,553 discloses crosslinked cellular elastomeric compositions which are formed from an elastomer composition comprising a natural and/or synthetic rubber, a crosslinking agent such as a peroxide, a monomeric metallic salt such as zinc dimethacrylate, zinc diacrylate, preferably basic zinc methacrylate and a blowing agent. The compositions may additionally contain fillers such as carbon black or titanium dioxide and other known compounding additives.

JP—A—51,138,616 describes a process for the preparation of a zinc salt of acrylic acid or methacrylic acid.

While the aforementioned patents describe compositions which are similar in several respects to the compositions of the present invention, they fail to disclose or suggest two major elements of the present compositions. Thus, these patents fail to recognize the importance of using a zinc dimethyacrylate having a surface area of from 3.7 to 5.4 $m^2/g$ or more.

Additionally, the patents neither disclose nor suggest compositions containing synergistic combinations of zinc dimethacrylate and clay.

In accordance with the invention, vulcanizable polymeric compositions which contain certain rubbery polymers, a zinc dimethacrylate of specified surface area, various fillers or filler mixtures and a peroxide curing agent are provided. The compositions comprise: (a) a rubbery polymer selected from the group consisting of natural rubber and a copolymer of a conjugated diene and at least one monoolefinic monomer; (b) from 2.5 to 20 parts by weight per 100 parts by weight of rubbery polymer of a zinc dimethacrylate having a surface area of from 3.7 to 5.4 $m^2/g$ or more; (c) from 30 to 70 parts by weight per 100 parts by weight of a filler selected from the group consisting of carbon black, clay, silica, mixtures of

2

carbon black and clay and mixtures of clay and silica and (d) a cure effective amount of a peroxide curing agent.

In a preferred embodiment of the invention, vulcanizable polymeric compositions containing natural rubber or a copolymer of a conjugated diene and a vinyl aromatic hydrocarbon and synergistic combinations of zinc dimethacrylate and clay are provided. The combination of zinc dimethacrylate and clay in these compositions have been found to synergistically enhance the strength of the cured compositions.

Rubbery polymers which may be utilized in the compositions of the invention include natural rubber and copolymers of a conjugated diene and at least one monoolefinic monomer.

The copolymers of conjugated dienes may be derived from conjugated dienes such as 1,3-butadiene, 2 - methyl - 1,3 - butadiene (isoprene), 2,3 - dimethyl - 1,3 - butadiene, 1,3-pentadiene and 1,3-hexadiene, as well as mixtures of the foregoing dienes. The preferred conjugated diene is 1,3-butadiene.

The copolymers may be derived from various monoolefinic monomers including vinyl aromatic monomers such as styrene, alpha-methyl styrene, vinyl naphthalene and vinyl pyridine; alkyl acrylates or methacrylates such as methyl acrylate, ethyl acrylate, butyl acrylate, methyl methacrylate and butyl methacrylate; unsaturated nitriles such as acrylonitrile and methacrylonitrile; and vinyl halides such as vinyl chloride and vinylidene chloride as well as mixtures of the foregoing monoolefins. The copolymers may contain up to 50 percent by weight of the monoolefinic monomer based upon total weight of copolymer. The preferred copolymer is a copolymer of a conjugated diene, especially butadiene, and a vinyl aromatic hydrocarbon, especially styrene. Typical of styrene-butadiene rubbery copolymers which may be utilized is a styrene-butadiene copolymer having a bound styrene content of 23.5%, a viscosity (ML4 at 100°C) of 50 and a specific gravity of 0.94 available under the designation S1502 from The Firestone Tire & Rubber Company.

The above-described copolymers of conjugated dienes and their method of preparation are well known in the rubber and polymer arts. Many of the polymers and copolymers are commercially available.

The zinc dimethacrylate employed in the compositions is a zinc dimethacrylate powder having a surface area of from 3.7 to 5.4 square meters per gram (m²/g) or more. A zinc dimethacrylate powder having the required surface area can be prepared by reacting under agitation zinc oxide and methacrylic acid in an amount of from 0.5 to 0.6 moles of zinc oxide per mole of methacrylic acid in a liquid aliphatic hydrocarbon dispersing medium to produce particles of zinc dimethacrylate in the liquid medium, recovering the particles of zinc dimethacrylate from the liquid medium and drying the particles of zinc dimethacrylate. A detailed description of the method of preparing the zinc dimethacrylate powder is disclosed in EP—A—0,139,043. A preferred zinc dimethacrylate powder is one having a surface area of 4.5 m²/g prepared in accordance with the procedure set forth in Example 3 of the aforementioned EP—A—0,139,043.

Amounts of zinc dimethacrylate which may be utilized in the compositions depend upon the type rubbery polymer, the type and amount of filler or mixture of fillers, and the properties desired in the cured or vulcanized composition. In general, the zinc dimethacrylate can be used in amounts of from 2.5 to 20 parts by weight per 100 parts by weight of rubbery polymer.

Fillers or mixtures of fillers which may be utilized in the compositions include carbon black, clay, silica, mixtures of carbon black and clay and mixtures of clay and silica.

Amounts of such fillers or mixtures of fillters which may be utilized in the compositions depend upon the type rubbery polymer, the amount of zinc dimethacrylate and the properties desired in the cured or vulcanized composition. In general, the fillers or mixtures of fillers can be used in amounts of from 30 to 70 parts by weight per 100 parts by weight of rubbery polymer.

Peroxide curing agents which may be used in the compositions include organic peroxides such as dicumyl peroxide, bis - (t- - butyl peroxy) diisopropyl benzene, t-butyl perbenzoate, di-t-butyl peroxide and 2,5 - dimethyl - 2,5 - di - 5 - butyl peroxy-hexane. The preferred peroxide curing agents are bis - (t - butyl peroxy) diisopropyl benzene and dicumyl peroxide.

Amounts of peroxide curing agents included in the compositions will depend upon the type rubber utilized and may broadly be stated as cure effective amounts. In general, such amounts may range from 0.2 to 2.0 parts by weight per 100 parts by weight of rubbery polymer. The compositions may optionally contain other additives commonly utilized in rubber compositions such as process and extender oils, antioxidants, waxes and the like.

As indicated above, in a preferred embodiment of the compositions of the invention, vulcanizable polymeric compositions are provided which contain a rubbery polymer selected from natural rubber or a copolymer of a conjugated diene and a vinyl aromatic hydrocarbon in combination with the zinc dimethacrylate and clay. A surprising and unexpected aspect of such compositions has been the discovery that the combination of clay and zinc dimethacrylate appears to synergistically enhance the strength of the vulcanized composition. Thus, as will be seen in Examples 7—17 below, the effect of the combination of zinc dimethyacrylate and clay on the cured strength of these compositions is not merely additive of the separate effects of the zinc dimethacrylate alone and clay alone but is in fact much greater. This is especially surprising because clay itself provides little if any reinforcement to rubber compounds.

The following examples are submitted for the purpose of further illustrating the nature of the present

# 0 139 044

invention and are not intended as a limitation on the scope thereof. Parts and percentages referred to in the examples and throughout the specification are by weight unless otherwise indicated.

Examples 1—3

In these examples, vulcanizable polymeric compositions of the invention containing styrene-butadiene rubber, zinc dimethacrylate, HAF carbon black and a peroxide curing agent were prepared. A composition containing the same components except for the zinc dimethacrylate component was also prepared to serve as a control. The compositions were mixed on an electric mill with no external heat added. The mixed compositions were cured and then tested for stress-strain properties. Composition formulations, curing conditions and stress-strain properties are shown in Table I.

TABLE I

| Example No. | Control | Parts by weight | | |
|---|---|---|---|---|
| | | 1 | 2 | 3 |
| Ingredients | | | | |
| S1502[a] | 100.0 | 100.0 | 100.0 | 100.0 |
| Zinc dimethacrylate | — | 12.5 | 10.0 | 20.0 |
| HAF black | 50.0 | 37.5 | 50.0 | 50.0 |
| Vulcup R[b] | 0.2 | 0.2 | 0.2 | 0.2 |
| | 150.2 | 150.2 | 160.2 | 170.2 |
| Stress-strain (cure: 20' at 160°C) | | | | |
| 300% modulus, MPa* | 1.8 | 3.7 | 9.7 | 5.2 |
| Tensile, MPa | 8.9 | 13.1 | 19.8 | 9.7 |
| Elongation, % | 1265 | 1071 | 537 | 579 |

*mpa means mega pascals
[a]a styrene-butadiene rubber containing 23.5% bound styrene having a viscosity (ML-4 at 100°C) of 50 and a specific gravity of 0.94 available from the The Firestone Tire @ Rubber Company
[b]bis-(t-butyl peroxy) diisopropyl benzene

Examples 4—6

In these examples, vulcanizable polymeric compositions of the invention containing styrene-butadiene rubber, zinc dimethacrylate, silica, an antioxidant and a peroxide curing agent were prepared. A composition containing the same components except for the zinc dimethacrylate component was also prepared to serve as a control.

The above compositions were mixed on an electric mill with no external heat added. The mixed compositions were cured and then tested for stress-strain properties. Composition formulations, curing conditions and stress-strain properties are shown in Table II.

TABLE II

| Example No. | Control | Parts by weight | | |
|---|---|---|---|---|
| | | 4 | 5 | 6 |
| Ingredients | | | | |
| S1502 | 100.0 | 100.0 | 100.0 | 100.0 |
| Zinc dimethacrylate | — | 10.0 | 15.0 | 20.0 |
| Hi-Sil 233®[a] | 50.0 | 50.0 | 40.0 | 50.0 |
| Polygard®[b] | 2.0 | 2.0 | 2.0 | 2.0 |
| Vulcup R® | 0.4 | 0.4 | 0.4 | 0.4 |
| | 152.4 | 162.4 | 157.4 | 172.4 |
| Stress-strain (cure: 20' at 160°C) | | | | |
| 300% modulus, MPa | 5.4 | 7.4 | 9.2 | 10.7 |
| Tensile, MPa | 14.2 | 17.6 | 21.3 | 19.2 |
| Elongation, % | 591 | 649 | 527 | 543 |

[a]a precipitated hydrated silica having a specific gravity of 2.0 available from PPG Industries, Inc.
[b]a tri-(nonylated phenyl) phosphite antioxidant having a specific gravity of 0.99 available from Uniroyal

4

Examples 7—17 which follow illustrate vulcanizable polymeric compositions of the invention containing natural rubber and styrene-butadiene rubber and synergistic combinations of zinc dimethacrylate and clay.

Examples 7—10

In these examples, vulcanizable polymeric compositions containing styrene-butadiene rubber, zinc dimethacrylate, clay, a peroxide curing agent and an antioxidant were prepared, mixed, cured and tested for stress-strain properties as in Examples 1—6. For comparative purposes, control compositions designated A and B containing zinc dimethacrylate alone (A) and clay alone (B) were prepared, mixed, cured and tested for stress-strain properties using substantially the same procedure. Composition formulations, curing conditions and stress-strain properties are shown in Table III.

TABLE III

| Example No. | A | B | 7 | 8 | 9 | 10 |
|---|---|---|---|---|---|---|
| Ingredients | | | | | | |
| S1502 | 100.00 | 100.00 | 100.00 | 100.00 | 100.00 | 100.00 |
| Zinc dimethacrylate | 10.00 | — | 2.50 | 5.00 | 7.50 | 10.00 |
| Clay | — | 60.00 | 60.00 | 60.00 | 60.00 | 60.00 |
| Polygard | 2.00 | 2.00 | 2.00 | 2.00 | 2.00 | 2.00 |
| Vulcup R | 0.50 | 0.50 | 0.50 | 0.50 | 0.50 | 0.50 |
| | 112.50 | 162.50 | 165.00 | 167.50 | 170.00 | 172.50 |
| Stress-strain (cure: 20′ at 160°C) | | | | | | |
| 300% modulus, MPa | 2.44 (200%) | 1.60 | 4.46 | 6.81 | 8.34 | 10.00 |
| Tensile, MPa | 3.23 | 3.53 | 10.70 | 12.90 | 16.70 | 16.20 |
| Elongation, % | 252 | 903 | 725 | 598 | 612 | 513 |

As can be seen from the above data, the combination of zinc dimethacrylate and clay enhances the cured strength of compositions of the invention to levels which are not merely additive of the combined effects of the separate components alone, thereby indicating that the combination produces a synergistic effect on such properties. Thus, for example, if the effects of the combination were merely additive of the effects of the separate components, one would expect a composition containing 10 parts of zinc dimethacrylate and 60 parts of clay to exhibit a cured tensile strength of about 6.8 MPa (i.e., the combined tensile strengths of Examples A and B).

However, as can be seen from Example 10, the combination actually produces a cured tensile strength of 16.2 MPa thereby indicating that the combination synergistically enhances the cured strength of the composition. One would also expect that combinations containing less than 10 parts of zinc dimethacrylate and 60 parts of clay would exhibit cured tensile strengths lower than 6.8 MPa. However, as can be seen from Examples 7—9, compositions containing 2.5, 5.0 and 7.5 parts of zinc dimethacrylate in combination with 60 parts of clay exhibit cured tensile strengths of 10.7, 12.9 and 16.7 MPa respectively, thereby indicating that these combinations are also synergistic.

Examples 11—13

In these examples, vulcanizable polymeric compositions containing styrene-butadiene rubber, variable levels of zinc dimethacrylate and clay, a peroxide curing agent and an antioxidant were prepared, mixed cured and tested for stress-strain properties as in Examples 1—6. For comparative purposes, control compositions designated Examples C, D and E containing zinc dimethacrylate alone (C and D) and clay alone (E) were prepared, mixed, cured and tested for stress-strain properties using substantially the same procedure. Composition formulations, curing conditions and stress-strain properties are shown in Table IV.

5

TABLE IV

| Example No. | C | D | E | 11 | 12 | 13 |
|---|---|---|---|---|---|---|
| Ingredients | | | | | | |
| S1502 | 100.00 | 100.00 | 100.00 | 100.00 | 100.00 | 100.00 |
| Zinc dimethacrylate | 10.00 | 20.00 | — | 10.00 | 15.00 | 20.00 |
| Clay | — | — | 50.00 | 50.00 | 45.00 | 50.00 |
| Polygard | 2.00 | 2.00 | 2.00 | 2.00 | 2.00 | 2.00 |
| Vulcup R | 0.25 | 0.25 | 0.25 | 0.25 | 0.25 | 0.25 |
| | 112.25 | 122.25 | 152.25 | 162.25 | 162.25 | 172.25 |
| Stress-strain | | | | | | |
| (cure: 20' at 160°C) | | | | | | |
| 300% modulus, MPa | 2.42 | 6.29 | 0.73 | 4.80 | 7.56 | 7.39 |
| Tensile, MPa | 6.48 | 7.67 | 1.38 | 11.30 | 14.7 | 10.60 |
| Elongation, % | 742 | 345 | 995 | 775 | 580 | 482 |

As can be seen from the above data, the combination of zinc dimethacrylate and clay at levels above 10 zinc dimethacrylate and levels below 60 clay also enhances the cured strengths of compositions of the invention to levels which are not merely additive of the combined effects of the separate components alone thereby indicating that these combinations produce a synergistic effect on such properties.

Examples 14—17

In these examples, vulcanizable polymeric compositions containing natural rubber (NR), zinc dimethacrylate, clay and a peroxide curing agent were prepared, mixed, cured and tested for stress-strain properties as in Examples 1—6. For comparative purposes, control compositions designated Examples F and G containing zinc dimethacrylate alone (F) and clay alone (G) were prepared, mixed, cured and tested for stress-strain properties using substantially the same procedure. Composition formulations, curing conditions and stress-strain properties are shown in Table V.

TABLE V

| Example No. | F | G | 14 | 15 | 16 | 17 |
|---|---|---|---|---|---|---|
| Ingredients | | | | | | |
| NR | 100.00 | 100.00 | 100.00 | 100.00 | 100.00 | 100.00 |
| Zinc dimethacrylate | 10.00 | — | 2.50 | 5.00 | 10.00 | 20.00 |
| Clay | — | 60.00 | 60.00 | 50.00 | 60.00 | 40.00 |
| Vulcup R | 0.50 | 0.50 | 0.50 | 0.50 | 0.50 | 0.50 |
| | 110.50 | 160.50 | 163.00 | 155.50 | 170.50 | 160.50 |
| Stress-strain | | | | | | |
| (cure: 30' at 160°C) | | | | | | |
| 300% modulus, MPa | 2.20 | 2.44 | 10.83 | 10.24 | 12.8 | 20.16 |
| Tensile, MPa | 5.90 | 2.66 | 11.91 | 11.20 | 12.8 | 26.39 |
| Elongation, % | 462 | 316 | 320 | 317 | 300 | 317 |

As can be seen from a comparison of Examples F and G with Example 16, the effect of the combination of 10 parts of zinc dimethacrylate with 60 parts of clay on the cured tensile strength of the composition is not merely additive of the separate effects of the components alone thereby indicating that the combination is synergistic. Thus, if the results were merely additive, one would expect to obtain a tensile of about 8 MPa whereas the actual tensile results for Example 16 are 12.8 MPa.

Examples 18—19

In these examples, vulcanizable polymeric compositions containing a rubbery nitrile polymer (i.e., a copolymer of butadiene and acrylonitrile defined below), zinc dimethacrylate, clay, a peroxide curing agent and an antioxidant were prepared, mixed, cured and tested for stress-strain properties as in Examples 1—6. For comparative purposes, control compositions designated H, J and K containing clay alone (H) and zinc dimethacrylate alone (J and K) were prepared, mixed, cured and tested for stress-strain properties using substantially the same procedure. Composition formulations, curing conditions and stress-strain properties are shown in Table VI.

6

TABLE VI

| Example No. | H | J | K | 18 | 19 |
|---|---|---|---|---|---|
| Ingredients | | | | | |
| FRN 600[a] | 100.0 | 100.0 | 100.0 | 100.0 | 100.0 |
| Zinc dimethacrylate | — | 5.0 | 10.0 | 5.0 | 10.0 |
| Clay | 60.0 | — | — | 60.0 | 60.0 |
| Polygard | 2.0 | 2.0 | 2.0 | 2.0 | 2.0 |
| Vulcup R | 0.4 | 0.4 | 0.4 | 0.4 | 0.4 |
| | 162.4 | 107.4 | 112.4 | 167.4 | 172.4 |
| Stress-strain (cure: 20′ at 160°C) | | | | | |
| 300% modulus, MPa | 3.60 | 2.30 | 3.80 | 5.86 | 8.41 |
| Tensile, MPa | 8.94 | 3.21 | 4.50 | 12.07 | 13.34 |
| Elongation, % | 830 | 390 | 338 | 744 | 576 |

[a]a butadient-acrylonitrile copolymer having an acrylonitrile content of 32%, a specific gravity of 0.98 and an $ML_4$ at 100°C of 50—60.

In the above evaluation, the combination of zinc dimethacrylate and clay in a composition containing a butadient-acrylonitrile copolymer does not appear to synergistically enhance the cured strength of the composition.

Examples 20—25

In these examples, vulcanizable polymeric compositions containing natural rubber, zinc dimethacrylate, clay, carbon black, a peroxide curing agent and an antioxidant were prepared, mixed, cured and tested for stress-strain properties as in Examples 1—6. Composition formulations, curing conditions and stress-strain properties are shown in Table VII.

TABLE VII

| Example No. | 20 | 21 | 22 | 23 | 24 | 25 |
|---|---|---|---|---|---|---|
| Ingredients | | | | | | |
| NR | 100.0 | 100.0 | 100.0 | 100.0 | 100.0 | 100.0 |
| Zinc dimethacrylate | 2.0 | 5.0 | 10.0 | 18.0 | 5.0 | 10.0 |
| HAF black | 20.0 | 30.0 | 25.0 | 20.0 | 30.0 | 30.0 |
| Clay | 30.0 | 10.0 | 10.0 | 5.0 | 20.0 | 20.0 |
| Antioxidant[a] | 2.0 | 2.0 | 2.0 | 2.0 | 2.0 | 2.0 |
| Vulcup R | 1.0 | 1.0 | 1.0 | 1.0 | 1.0 | 1.0 |
| | 155.0 | 148.0 | 148.0 | 146.0 | 158.0 | 163.0 |
| Stress-strain (cure: 23′ at 166°C) | | | | | | |
| 200% modulus, MPa | 4.27 | 6.28 | 6.55 | 7.24 | 6.55 | 8.34 |
| Tensile, MPa | 11.86 | 14.20 | 18.55 | 22.83 | 15.59 | 19.72 |
| Elongation, % | 360 | 320 | 360 | 400 | 330 | 350 |

[a]N-(1,3-dimethylbutyl)-N′-phenyl-para-phenylene diamine.

Examples 26—28

In these examples, vulcanizable polymeric compositions containing styrene-butadiene rubber, zinc dimethacrylate, clay, silica, a peroxide curing agent and an antioxidant were prepared, mixed, cured and tested for stress-strain properties as in Examples 1—6. Composition formulations, curing conditions and stress-strain properties are shown in Table VIII.

# 0 139 044

TABLE VIII

| Example No. | 26 | 27 | 28 |
|---|---|---|---|
| Ingredients |  |  |  |
| S1502 | 100.0 | 100.0 | 100.0 |
| Zinc dimethacrylate | 10.0 | 10.0 | 10.0 |
| Clay | 50.0 | 40.0 | 30.0 |
| Silica | 10.0 | 20.0 | 30.0 |
| Polygard | 2.0 | 2.0 | 2.0 |
| Vulcup R | 0.5 | 0.5 | 0.5 |
|  | 172.5 | 172.5 | 172.5 |
| Stress-strain |  |  |  |
| (cure: 20' at 160°C) |  |  |  |
| 300% modulus, MPa | 9.24 | 8.64 | 7.27 |
| Tensile, MPa | 13.10 | 15.30 | 16.60 |
| Elongation, % | 500 | 581 | 768 |

**Claims**

1. Vulcanizable polymeric compositions comprising:
(a) a rubbery polymer selected from the group consisting of natural rubber and a copolymer of a conjugated diene and at least one monoolefinic monomer;
(b) zinc dimethacrylate;
(c) from 30 to 70 parts by weight per 100 parts by weight of said rubbery polymer of a filler selected from the group consisting of carbon black, clay, silica, mixtures of carbon black and clay and mixtures of clay and silica; and
(d) a cure effective amount of a peroxide curing agent,
characterized in that the compositions contain 2.5 to 20 parts by weight per 100 parts by weight of said rubbery polymer of a zinc dimethacrylate having a surface area of from 3.7 to 5.4 $m^2/g$ or more.

2. The composition of claim 1 wherein said copolymer contains up to 50 percent by weight of said monoolefinic monomer based on total weight of copolymer.

3. The composition of claim 1 wherein said copolymer is a copolymer of a conjugated diene and a vinyl aromatic hydrocarbon.

4. The composition of claim 3 wherein said copolymer is a copolymer of butadiene and styrene.

5. The composition of claim 1 wherein said copolymer is a copolymer of butadiene and acrylonitrile.

6. The composition of claim 1 wherein said zinc dimethacrylate has a surface arsa of 4.5 $m^2/g$.

7. The composition of claim 1 containing from 0.2 to 2.0 parts by weight of a peroxide curing agent per 100 parts by weight of said rubbery polymer.

8. The composition of claim 7 wherein said peroxide curing agent is dicumyl peroxide or bis-(t-butyl peroxy) diisopropyl benzene.

9. The composition of claim 1 wherein said rubbery polymer is natural rubber and said copolymer is a copolymer of styrene and butadiene containing 23.5 percent bound styrene.

10. The composition of claim 1 wherein said copolymer is a copolymer of butadiene and acrylonitrile containing 32 percent by weight of acrylonitrile.

11. The composition of claim 1 wherein said rubbery polymer is natural rubber or a copolymer of styrene-butadiene containing 23.5 percent bound styrene and said filler is clay.

12. The composition of claim 11 wherein said peroxide curing agent is bis-(t-butyl peroxy) diisopropyl benzene.

**Patentansprüche**

1. Vulkanisierbare polymere Massen, enthaltend:
(a) ein kautschukartiges Polymeres, ausgewählt aus der Gruppe bestehend aus Naturkautschuk und einem Copolymeren aus einem konjugierten Dien und mindestens einem monoolefinischen Monomeren,
(b) Zinkdimethacrylat,
(c) 30 bis 70 Gew.-Teile pro 100 Gew.-Teile des genannten kautschukartigen Polymeren eines Füllstoffs, ausgewählt aus der Gruppe bestehend aus Ruß, Ton, Kieselsäure, Gemischen aus Ruß und Ton und Gemischen aus Ton und Kieselsäure, und
(d) eine für die Härtung wirksame Menge eines Peroxid-Härtungsmittels,
dadurch gekennzeichnet, daß die Masse 2,5 bis 20 Gew.-Teile pro 100 Gew.-Teile des genannten kautschukartigen Polymeren eines Zinkdimethacrylats mit einer spezifischen Oberfläche von 3,7 bis 5,4 $m^2/g$ oder mehr enthält.

# 0 139 044

2. Masse nach Anspruch 1, dadurch gekennzeichnet, daß das Copolymere bis zu 50 Gew.-% monoolfinisches Monomeres, bezogen auf die Gesamtgewicht des Copolymeren, enthält.

3. Masse nach Anspruch 1, dadurch gekennzeichnet, daß das Copolymere ein Copolymeres aus einem konjugierten Dien und einem vinylaromatischen Kohlenwasserstoff ist.

4. Masse nach Anspruch 3, dadurch gekennzeichnet, daß das Copolymere ein Copolymeres aus Butadien und Styrol ist.

5. Masse nach Anspruch 1, dadurch gekennzeichnet, daß das Copolymere ein Copolymeres aus Butadien und Acrylnitril ist.

6. Masse nach Anspruch 1, dadurch gekennzeichnet, daß das Zinkdimethacrylat eine spezifische Oberfläche von 4,5 m²/g hat.

7. Masse nach Anspruch 1, dadurch gekennzeichnet, daß sie 0,2 bis 2,0 Gew.-Teile eines Peroxid-Härtungsmittels pro 100 Gew.-Teile des kautschukartigen Polymeren enthält.

8. Masse nach Anspruch 7, dadurch gekennzeichnet, daß das Peroxid-Härtungsmittel Dicumylperoxid oder Bis-(t-butylperoxy)-diisopropylbenzol ist.

9. Masse nach Anspruch 1, dadurch gekennzeichnet, daß das kautschukartige Polymere Naturkautschuk ist und daß das Copolymere ein Copolymeres aus Styrol und Butadien, welches 23,5 Gew.-% gebundenes Styrol enthält, ist.

10. Masse nach Anspruch 1, dadurch gekennzeichnet, daß das Copolymere ein Copolymeres aus Butadien und Acrylnitril, das 32 Gew.-% Acrylnitril enthält, ist.

11. Masse nach Anspruch 1, dadurch gekennzeichnet, daß das kautschukartige Polymere Naturkautschuk oder ein Copolymeres aus Styrol-Butadien, enthaltend 23,5 Gew.-% gebundenes Styrol, ist und daß der Füllstoff Ton ist.

12. Masse nach Anspruch 11, dadurch gekennzeichnet, daß das Peroxid-Härtungsmittel Bis-(t-butylperoxy)-diisopropylbenzol ist.

## Revendications

1. Compositions polymériques vulcanisables, comprenant:
(a) un polymère du type caoutchouc choisi dans le groupe comprenant le caoutchouc naturel et un copolymère d'un diène conjugué et d'au moins un monomère mono-oléfinique;
(b) du diméthacrylate de zinc;
(c) 30 à 70 parties en poids, pour 100 parties en poids dudit polymère du type caoutchouc, d'une charge choisie dans le groupe comprenant le noir de carbone, l'argile, la silice, des mélanges de noir de carbone et d'argile et des mélanges d'argile et de silice; et
(d) une quantité à effet vulcanisant d'un agent peroxydique de vulcanisation,
caractérisées en ce qu'elles contiennent 2,5 à 20 parties en poids, pour 100 parties en poids dudit polymère du type caoutchouc, d'un diméthacrylate de zinc ayant une surface spécifique de 3,7 à 5,4 m²/g ou plus.

2. Composition suivant la revendication 1, dans laquelle le copolymère contient jusqu'à 50% en poids dudit monomère mono-oléfinique, sur la base du poids total de copolymère.

3. Composition suivant la revendication 1, dans laquelle le copolymère est un copolymère d'un diène conjugué et d'un hydrocarbure aromatique vinylique.

4. Composition suivant la revendication 3, dans laquelle le copolymère est un copolymère de butadiène et de styrène.

5. Composition suivant la revendication 1, dans laquelle le copolymère est un copolymère de butadiène et d'acrylonitrile.

6. Composition suivant la revendication 1, dans laquelle le diméthacrylate de zinc a une surface spécifique de 4,5 m²/g.

7. Composition suivant la revendication 1, contenant 0,2 à 2,0 parties en poids d'un agent peroxydique de vulcanisation pour 100 parties en poids de polymère du type caoutchouc.

8. Composition suivant la revendication 7, dans laquelle l'agent peroxydique de vulcanisation est le peroxyde de dicumyle ou le bis-(tertio-butylperoxy)diisopropylbenzène.

9. Composition suivant la revendication 1, dans laquelle le polymère du type caoutchouc est un caoutchouc naturel et le copolymère est un copolymère de styrène et de butadiène contenant 23,5% de styrène lié.

10. Composition suivant la revendication 1, dans laquelle le copolymère est un copolymère de butadiène et d'acrylonitrile contenant 32% en poids d'acrylonitrile.

11. Composition suivant la revendication 1, dans laquelle le polymère du type caoutchouc est le caoutchouc naturel ou un copolymère de styrène-butadiène contenant 23,5% de styrène lié et la charge est une argile.

12. Composition suivant la revendication 11, dans laquelle l'agent peroxydique de vulcanisation est le bis-(tertio-butylperoxy)diisopropylbenzène.